# FASCICULE DE BREVET EUROPEEN

(11) **EP 2 726 262 B1**
(45) Date de publication et mention de la délivrance du brevet: **19.09.2018**
(21) Numéro de dépôt: 12731557.0
(22) Date de dépôt: 11.06.2012
(51) Int. Cl.: B22F 3/22, C04B 35/486, C04B 35/626, C04B 35/634, C04B 35/638, C04B 35/64, B28B 1/24

(54) **PROCÉDÉ DE FABRICATION DE PIÈCES COLORÉES EN CÉRAMIQUE PAR PIM**
VERFAHREN ZUR HERSTELLUNG VON FARBIGEN KERAMISCHEN TEILEN DURCH PIM
PROCESS OF MANUFACTURING CERAMIC COLOURED ARTICLES BY PIM

(30) Priorité: 30.06.2011 FR 1155915
(43) Date de publication de la demande: 07.05.2014
(73) Titulaire: Commissariat à l'Énergie Atomique et aux Énergies Alternatives, 75015 Paris (FR)
(72) Inventeur: SERVANT, Florence, F-38410 Vaulnaveys Le Haut (FR); BAILLEUX, Michel, F-38220 Saint Barthelemy De Sechilienne (FR)
(74) Mandataire: Cabinet Laurent & Charras
(86) Numéro de dépôt international: PCT/FR2012/051300
(87) Numéro de publication internationale: WO 2013/001201

(56) Documents cités:
- EP-A2- 1 031 423
- ES-A1- 2 338 740
- US-A- 4 551 436
- US-A1- 2009 115 092
- US-A1- 2010 240 519

## Description

### DOMAINE TECHNIQUE

La présente demande a trait à la réalisation de pièces colorées par des techniques de moulage par injection PIM (selon l'acronyme anglo-saxon « *Powder Injection Molding* »), et en particulier à la préparation de mélanges-maîtres (« *feedstocks* ») utilisés pour le moulage par injection ou par extrusion.

Plus précisément, la présente demande concerne un nouveau procédé de réalisation de mélange-maître utilisant un prétraitement de la poudre colorée avant mélange avec le liant organique.

### ETAT ANTERIEUR DE LA TECHNIQUE

La technique de moulage par injection PIM (ou microPIM lorsqu'il s'agit de poudres ultrafines) est couramment utilisée pour la réalisation de divers objets. Le moulage par injection de poudre est un procédé en plusieurs étapes qui combine le moulage par injection des plastiques et la consolidation utilisée en métallurgie des poudres par tout type de frittage. Il permet la réalisation de composants métalliques et céramiques.

Dans un tel procédé, la première étape consiste à obtenir un mélange-maître (ou « *feedstock* ») adapté à l'application visée. Les mélanges - maîtres sont constitués d'un mélange de matière organique (ou liant polymérique) et de poudres inorganiques (métalliques ou céramiques).

Ensuite, le mélange-maître s'injecte comme un thermoplastique. Enfin, la pièce est déliantée puis frittée.

Plus précisément, les mélanges-maîtres constitués de matériaux polymériques agissant comme liant et de poudres métalliques ou céramiques, sont réalisés à chaud et injectés dans un moule. Il en résulte une pièce injectée en polymère chargé de poudre, appelée pièce « verte ». Cette pièce verte possède la même forme que la pièce finale mais de plus grandes dimensions.

Les polymères utilisés pour permettre l'injection du matériau doivent ensuite être extraits par déliantage. Le liant est donc extrait, puis la pièce dite alors « brune » qui en résulte est frittée pour consolidation et densification tout en gardant, de manière homothétique, la forme de la pièce « verte ». Il en résulte des pièces céramiques et métalliques.

De manière connue, il existe différentes techniques de déliantage selon la composition chimique et/ou physique des polymères utilisés: le déliantage catalytique, thermique, par solvant, à l'eau, ou par CO₂ supercritique.

L'un des principaux éléments pour la réussite d'une pièce exempte de fissures ayant la forme et les détails désirés réside dans la composition chimique du liant utilisé dans le mélange - maître. Le mélange doit être assez fluide pour être injecté et moulé, et présenter une bonne tenue mécanique pour pouvoir démouler et manipuler la pièce verte. De plus, il ne doit pas comporter de matière organique ou inorganique susceptible de dégazer pendant le procédé de réalisation du feedstock, car ceci pourrait conduire à la présence de pores dans la pièce finale.

Il est également important de mélanger un maximum de poudre avec le liant, c'est-à-dire de disposer d'un taux de charge en poudre élevé pour minimiser le taux de retrait de la pièce lors du frittage et ainsi éviter les fissures des pièces, tout en améliorant la densité des pièces. Les taux de charge critique (maximum) varient selon la taille de la poudre et ses propriétés chimiques et/ou physiques, mais sont généralement compris entre 40 et 75% en volume.

Par ailleurs, les poudres céramiques nanométriques utilisées sont en général conditionnées après une étape d'atomisation-séchage [Masters, K. Spray Drying, Handbook, 1991 p569 ff].

La poudre se présente alors sous forme d'agglomérats réguliers sphériques. La technique d'atomisation-séchage (« *spray drying* ») consiste à injecter une solution liquide à travers une buse qui vibre à une certaine fréquence dans le but de réaliser des gouttes qui seront ensuite séchées in situ. La solution utilisée est réalisée à partir de poudre mélangée à un liquide qui peut être de différente nature : de l'eau, un solvant comme l'éthanol ou encore un liant polymérique dissout ou non (par exemple le PVA). Cette solution est plus ou moins chargée en poudre selon que l'on souhaite obtenir des sphères plus ou moins remplies. Ces sphères sont quand même très poreuses au final, étant donné que le liquide a séché partiellement (cas des liants polymériques) ou totalement (cas de l'eau, de l'alcool...). Malgré cette porosité imposée par la technique, l'atomisation-séchage permet d'obtenir des poudres qui ont une densité apparente plus élevée, en comparaison avec les agglomérats sous forme de pelotes formant un réseau très expansé. Ainsi et à titre d'exemple, le gain est d'environ 30% pour une poudre de zircone de 6.8 mm²/g.

Cette technique est couramment utilisée dans la métallurgie des poudres pour plusieurs raisons :
Tout d'abord, la poudre issue de l'atomisation-séchage, dite atomisée, présente l'avantage de pouvoir être manipulée plus facilement et de façon plus sécurisée, la poudre étant moins volatile.

De plus, sa coulabilité est un atout. Cette notion de coulabilité peut être définie par plusieurs méthodes allant des plus empiriques à des méthodes plus scientifiques et quantitatives. Les méthodes les plus proches des procédés d'utilisation des poudres sont en général mises en oeuvre, en particulier l'écoulement à travers un orifice. Par exemple, il est possible de mesurer le temps que met 50 g de poudre à couler à travers un entonnoir de diamètre compris entre 2 et 5 mm. Les paramètres expérimentaux varient en fonction de la nature de la poudre puisqu'ils dépendent en grande partie de l'intensité et de la nature des forces d'interaction entre les particules. Il s'agit ici d'une expérience comparative entre des poudres non atomisées et atomisées. Une poudre très pulvérulente et non atomisée peut mettre un temps infini à s'écouler, alors qu'une poudre correctement atomisée peut s'écouler très rapidement. La présence de liants polymériques permet aussi d'améliorer la coulabilité de la poudre.

Cette coulabilité permet d'augmenter la densité tassée de la poudre. L'arrangement des sphères dans un volume V est supérieur à l'arrangement de la poudre sous forme d'agglomérats aléatoires (sous forme de pelotes expansées). Ainsi, dans les procédés de mise en forme par compaction classique (compaction isostatique, uni-axiale, à froid ou à chaud), la densité à cru des pièces s'en trouve améliorée. Ce meilleur arrangement des agglomérats sphériques dans le cas d'une poudre atomisée permet ainsi d'améliorer considérablement la densité des pièces frittées (par frittage naturel, par SPS (« *Spark Plasma Sintering* » ou Frittage à plasma d'étincelles), par HIP (« *Hot Isostatic Pressing* » ou pressage isostatique à chaud)...

Le document US 2009/115092 décrit un procédé de préparation de mélange-maitre pour moulage ou injection, dans lequel la poudre inorganique, en l'occurrence une poudre de silice, obtenue après une étape d'atomisation-séchage, est déliantée et légèrement préfrittée, via un traitement à 1000°C, avant son mélange avec un liant polymérique en vue d'une seconde étape d'atomisation-séchage.

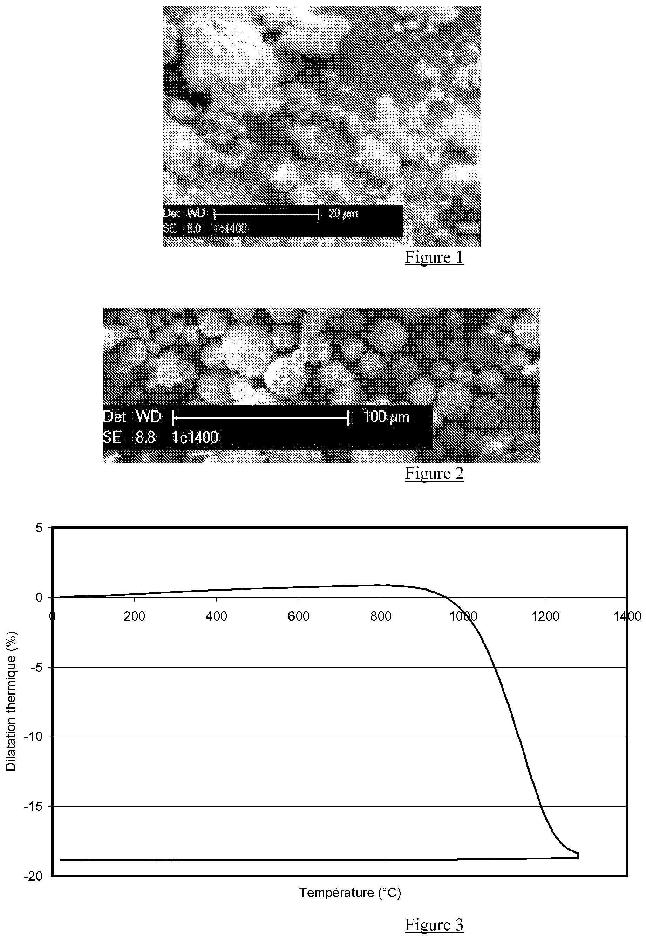

Dans le cas du moulage par injection de poudre de céramique (CIM), l'utilisation de poudre atomisée n'a un avantage que du point de vue de la sécurité. Elle est d'ailleurs largement utilisée dans l'injection par moulage de poudre de zircone puisque les pièces frittées de céramiques sont réalisées avec de la poudre nanométrique à forte surface spécifique (par exemple, 6,9 g.cm² pour de la zircone 3YSE (Tosoh Corporation). Dans ce cas, les avantages de l'atomisation liés à une meilleure densité tassée n'ont plus de sens puisque la poudre est mélangée à chaud avec des liants polymériques pour constituer le feedstock. La poudre n'est pas ici tassée mais injectée. La force de cisaillement réalisée par le mélangeur ou l'extrudeuse est telle que les sphères atomisées se désolidarisent. La poudre se comporte comme si elle n'avait pas été atomisée, comme illustré à la figure 1. Les forces électrostatiques qui maintenaient les cristallites de poudres sous forme d'agglomérats sphériques sont bien moins importantes en intensité que les forces de cisaillement appliquées lors du mélange. L'utilisation de liants polymériques pendant l'atomisation pourrait empêcher cette désagglomération mais ceux-ci sont portés à une température supérieure à leur température de fusion dans le but de réaliser un mélange poudre polymère très homogène. En effet, cette homogénéité du mélange est cruciale pour réaliser des pièces exemptes de fissures après le moulage, le déliantage et le frittage (nécessité de retrait homogène).

Dans un cas particulier, les poudres céramiques sont colorées. Les procédés de coloration des poudres céramiques sont assez connus. Les pigments ajoutés pour la coloration sont des oxydes métalliques ou des précurseurs métalliques. Ils peuvent être mélangés à la solution de départ avant atomisation-séchage. Ces pigments sont mélangés, après atomisation-séchage, avec la céramique de façon intime et se trouvent entre les grains. Une fois la céramique frittée, les pigments sont insérés aux joints de grains sous forme d'oxydes métalliques, sous forme de précipités dans la matrice céramique (nouvelle phase entre l'oxyde métallique et la céramique) ou sous forme dissoute (solution solide dans la céramique).

Le document US 2010/240519 décrit l'obtention de pièces de zircone colorée comprenant le mélange de YSZ avec le colorant, la soumission du mélange à une étape d'atomisation-séchage puis l'ajout d'un liant organique pour obtenir un mélange-maître qui peut être moulé.

L'utilisation de poudre céramique colorée atomisée dans la fabrication de mélanges-maîtres peut toutefois présenter des problèmes de réalisation. En effet, il arrive que ces mélanges-maîtres présentent des comportements rhéologiques différents de ceux de la poudre non colorée.

En effet, le mélange-maître utilisant des céramiques colorées, notamment à base de précurseurs, présente un dégazage lors de la réalisation du mélange à chaud. Ainsi, son aspect est mousseux. Le mélange-maître est alors pourvu d'un grand nombre de pores lors de son refroidissement. Ces mélanges-maîtres ne peuvent pas s'injecter par la suite, ce qui est très gênant dans le procédé CIM.

Il existe donc un besoin évident de développer de nouvelles solutions techniques permettant d'éviter les écueils mentionnés ci-dessus, en rapport avec les céramiques colorées et la technologie CIM.

### OBJET DE L'INVENTION

La présente invention s'inscrit dans le cadre de la fabrication par moulage de pièces en céramique colorées. Elle propose de soumettre la poudre colorée atomisée à une étape de préfrittage ou recuit, avant la préparation du feedstock.

Plus précisément, la présente invention concerne un procédé de fabrication d'un mélange-maître destiné au moulage de pièces colorées, qui comprend les étapes suivantes :
- préparation d'un mélange comprenant une poudre céramique, et un colorant ;
- soumission du mélange à une étape d'atomisation-séchage pour obtenir une poudre colorée atomisée;
- soumission de ladite poudre colorée atomisée à une étape de préfrittage à une température de préfrittage comprise entre 0,8T1 et T2 avec :
   - T1, la température en °C à laquelle la poudre atteint une dilatation thermique maximale, juste avant le frittage ;
   - T2, la température en °C à laquelle la poudre atteint 2% de retrait dû au frittage ;
- mélange de la poudre colorée préfrittée à un liant organique, avantageusement polymérique, pour obtenir le mélange-maître.

Le mélange mis en oeuvre selon l'invention comprend donc au moins une poudre céramique, voire un mélange de poudres céramiques. La présente invention est particulièrement adaptée à la fabrication de pièces céramiques et donc réalisées à base de poudre(s) céramique(s), telle que l'oxyde de zirconium (ou zircone),
éventuellement dopé ou stabilisé à l'aide d'yttrium, de magnésium, de cérium ou de calcium, typiquement à hauteur de 2 à 20 % massique, avantageusement de 2 à 8%.

Le mélange contient en outre au moins un colorant, voire un mélange de colorants, représentant avantageusement de 0,1 et 15 % en masse de la poudre. Le colorant est avantageusement un pigment coloré. Il peut s'agir d'un oxyde métallique, tel que l'oxyde de fer, inséré tel quel dans la poudre, ou inséré sous forme ionique en tant que précurseur métallique.

Avantageusement, la poudre céramique incluant notamment le colorant est submicronique avec des cristallites, c'est-à-dire des particules élémentaires sous forme de grains désagglomérés, de taille moyenne de l'ordre de 5 micromètres ou moins, avantageusement inférieure à 30 nanomètres.

Dans la mesure où ce mélange est destiné à subir une étape d'atomisation-séchage, il contient avantageusement un liquide de manière à former une solution. De manière avantageuse, le liquide est de l'eau, le mélange se présentant sous la forme d'une solution aqueuse.

L'étape suivante est la soumission du mélange à une étape d'atomisation-séchage dans des conditions classiques, connues de l'homme du métier.

Optionnellement, un tamisage destiné à éliminer les agglomérats sphériques de taille supérieure à une certaine taille, typiquement de quelques dizaines de micromètres, par exemple de 200 ou 50 micromètres, peut alors être effectué.

De manière caractéristique selon l'invention, la poudre ainsi atomisée (qui est également colorée et éventuellement tamisée) est ensuite soumise à une étape de recuit ou de préfrittage.

La température de préfrittage peut être déterminée au préalable par une mesure de dilatométrie sur une pastille de poudre, avantageusement de céramique colorée, réalisée par pressage.

La courbe de dilatation thermique en fonction de la température passe par un maximum juste avant le frittage qui permet au matériau de réduire son volume (dans le cas d'un frittage densifiant). Le retrait du matériau est de l'ordre de 10 à 30 % en fonction de la pression exercée lors du pressage et du type de poudre (notamment céramique colorée) utilisée.

De manière générale, la température de préfrittage est la température T1 correspondant à la dilatation thermique maximale, juste avant le frittage.

La borne inférieure de cette température T1 est de 0.8xT1, préférentiellement 0.9xT1.

La borne maximale de cette température T1 est la température T2 correspondant à 2% de retrait dû au frittage, préférentiellement 1%.

Dans le cas particulier de la zircone yttriée marron (contenant 3% massique d'oxyde de fer), la température de préfrittage est préférentiellement comprise entre 640°C et 1030°C, encore plus préférentiellement entre 720°C et 1000°C. De manière plus générale, le préfrittage est réalisé à une température comprise entre 500°C et 1400°C, préférentiellement entre 700°C et 1200°C pour la zircone.

Le préfrittage doit donc être réalisé à une température suffisamment basse pour éviter les grossissements de grains, qui ferait perdre à la poudre, avantageusement une céramique, ses bonnes propriétés de frittage (dues à la petite taille de ses cristallites). A noter que la croissance de grains peut être contrôlée grâce à des analyses au MEB FEG (microscope électronique à effet de champ) et les phases cristallographiques, par la technique de diffraction X.

Par ailleurs, le préfrittage doit être réalisé à une température suffisamment élevée pour que les agglomérats sphériques soient assez solides mécaniquement afin de résister à la force de cisaillement du mélangeur ou de l'extrudeur utilisé pour réaliser le mélange-maître. Ceci peut être vérifié après déliantage du polymère. La poudre déliantée peut être observée au microscope optique ou au microscope électronique par balayage selon la taille des sphères atomisées. Si la poudre a conservé la même forme sphérique que la poudre atomisée et préfrittée avant mélange, c'est que la température était suffisamment élevée. La poudre déliantée peut aussi être comparée à la poudre atomisée et préfrittée avant le mélange par des mesures de coulabilité définies précédemment.

En pratique, l'étape de préfrittage ou de recuit de la poudre atomisée est avantageusement réalisée pendant 1 heure à 10 heures, préférentiellement pendant 2 à 6 heures.

Ainsi, ce traitement par recuit de la poudre atomisée permet de maintenir les avantages de son conditionnement en agglomérats sphériques adapté au procédé CIM. La poudre atomisée est préfrittée en tout ou partie (avantageusement au moins 10% en poids).

L'un des avantages de cette étape de préfrittage est d'évacuer totalement les gaz produits par les précurseurs et adjuvants utilisés lors de la préparation liquide pour l'atomisation. Ainsi, le mélange - maître n'a plus d'aspect mousseux et peut être injecté par la suite sans emprisonner de pores dans le polymère, incompatible avec la fabrication de pièces denses.

De plus, la coulabilité conservée de la poudre permet à la poudre un bon écoulement rhéologique dans le polymère fondu, le mélange-maître ayant une viscosité plus faible pour un taux de charge identique, ce qui permet d'augmenter le taux de charge pour une composition de polymère donnée. Cela facilite aussi l'opération d'injection d'un point de vue rhéologique. Un taux de charge plus élevé permet d'avoir moins de retrait au frittage donc moins de fissures liées au retrait.

Un autre avantage est que l'homogénéité du mélange se trouve améliorée par ce procédé. En effet, l'évacuation des gaz lors du déliantage se trouve facilitée grâce à la présence de canaux préférentiels. Ces canaux résultent de l'empilement plus régulier des agglomérats sphériques de céramique.

L'étape suivante correspond à la préparation à proprement parler du mélange-maître. De manière classique, il s'agit de mélanger la poudre colorée ainsi prétraitée (atomisée et préfrittée) à un liant organique, avantageusement polymérique, destiné à être éliminé lors de l'étape de déliantage.

Typiquement, la poudre issue des étapes précédentes (colorée, atomisée, préfrittée) représente de 40 à 75% en volume du mélange-maître, préférentiellement entre 50 et 65%.

Avantageusement, le liant organique, avantageusement polymérique, comprend un ou plusieurs polymères d'addition assurant les fonctions de plastifiant, de lubrifiant et/ou de surfactant. En pratique et de manière privilégiée, il comprend :
- un homo ou un copolymère de tenue présentant de bonnes propriétés de ductilité, tel que le LLDPE (linear low-density polyethylene) ;
- un lubrifiant, tel que la cire de paraffine (par exemple de la cire de polyéthylène ou PW) ; et
- un plastifiant, tel que le polyéthylène glycol (PEG),
dans des proportions massiques adaptées.

A un tel mélange ternaire peut être ajouté un surfactant ou dispersant, tel que de l'acide stéarique (AS).

Le mélange-maître est alors réalisé par extrusion à l'aide d'une extrudeuse ou à l'aide d'un mélangeur du type malaxeur, à chaud de manière à fondre les polymères.

Selon un autre aspect, l'invention vise également un procédé de fabrication de pièces colorées moulées qui comprend les étapes suivantes :
- préparation d'un mélange-maître selon le procédé objet de l'invention ;
- injection du mélange-maître dans un moule pour former la pièce ;
- déliantage de la pièce ;
- frittage de la pièce.

La préparation du mélange-maître est avantageusement réalisée comme décrit ci-dessus.

Selon un mode de réalisation privilégié, le feedstock ainsi préparé est refroidi puis granulé, avantageusement à l'aide d'un granulateur. Il est alors utilisé comme matière première pour l'injection où il sera refondu.

L'injection dans un moule adapté se déroule de manière classique, avantageusement sous pression. Typiquement, le granulé est chauffé dans la vis d'injection, puis injecté en matrice.

Classiquement, l'étape de déliantage est destinée à éliminer le liant polymérique. Il s'agit avantageusement de déliantage chimique ou de déliantage thermique.

Les températures de déliantage thermique sont avantageusement comprises entre 0 et 600°C et les rampes en température sont très lentes pour éviter l'apparition de fissures (entre 5 et 150 °C/heure, préférentiellement entre 5 et 20°C/heure). Le déliantage des céramiques est réalisé avantageusement sous air.

L'étape suivante est le frittage. La température de frittage dépend de la granulométrie de la poudre, de sa nature et de la nature des oxydes colorants. De manière avantageuse, le frittage est réalisé à une température comprise entre 1250°C et 1400°C. La durée du frittage est généralement comprise entre 1 heure et 10 heures, avantageusement 5 heures.

Les avantages de la présente invention ressortiront mieux des exemples de réalisation qui suivent.

### LEGENDES DES FIGURES

La figure 1 correspond à une vue en microscopie électronique à balayage (MEB) d'une poudre (zircone yttriée à 3% + 3% d'oxyde de Fer) déliantée, qui n'a pas été préfrittée après atomisation-séchage.
La figure 2 correspond à une vue en MEB d'une poudre (zircone yttriée à 3% + 3% d'oxyde de Fer) déliantée, ayant subi un préfrittage après atomisation-séchage.
La figure 3 représente une courbe de dilatation thermique de la zircone yttriée à 3%, contenant 3% d'oxyde de Fer.

### EXEMPLES DE REALISATION

Les exemples de réalisation qui suivent, à l'appui des figures annexées, ont pour but d'illustrer l'invention mais ne sont en aucun cas limitatifs.

Afin d'illustrer les avantages du procédé selon l'invention, quatre feedstocks contenant 53% de poudre de zircone yttriée à 3% (TZ3YS-E, Tosoh Corporation), colorée à l'aide de 3% massique d'oxyde de Fer, mélangées via atomisation séchage, ont été préparés :
- le premier feedstock (1) a été préparé à partir d'une poudre qui n'a pas subi de préfrittage ;
- le deuxième feedstock (2) a été préparé à partir d'une poudre qui a subi un préfrittage à 600°C ;
- le troisième feedstock (3) a été préparé à partir d'une poudre qui a subi un préfrittage à 900°C ;
- le quatrième feedstock (4) a été préparé à partir d'une poudre qui a subi un préfrittage à 1100°C.

Les expériences ont été réalisées avec une vitesse de montée et de descente en température de 100 °C/heure, et un palier de température de 5 heures.

### 1/ Description des poudres atomisées :

L'atomisation séchage a été réalisée avec une buse à ultrasons à la fréquence de 33Hz à 240°C avec un débit de 500mL/h.

Un tamisage a été réalisé avant préfrittage avec un tamis à 100 micromètres.

Les sphères atomisées ont un diamètre médian (d50) d'environ 59 µm, avant et après préfrittage.

Les densités tassées de la poudre atomisée, avant et après préfrittage, sont équivalentes et égales à 1.5 g/cm³.

La poudre atomisée non préfrittée (1) ne s'est pas écoulée dans un entonnoir de buse de diamètre 5 mm. Au contraire, une fois préfrittées à 600 °C, 900 °C ou à 1100 °C, les poudres atomisées (2), (3) et (4) ont gagné en écoulement puisqu'elles ont mis 29, 28 et 26 secondes pour s'écouler, respectivement.

### 2/ Préparation des feedstocks :

Afin de préparer les feedstocks, les poudres atomisées, éventuellement préfrittées, sont mélangées dans un mélangeur ou dans une extrudeuse avec un mélange de trois polymères dans les proportions suivantes:
- du LLDPE à hauteur de 53% en poids ;
- du PEG 20 000 à hauteur de 29% en poids ;
- de la cire de paraffine, plus précisément de la cire de polyéthylène (PW) à hauteur de 18% en poids ;
soit 100% massique.

De l'acide stéarique (AS) est ajouté à hauteur de 7,8% massique du total du mélange ternaire (LLDPE +PEG +PW).

Le mélange est ici chargé en poudre à 53% volumique (par rapport aux quatre polymères : AS + LLDPE + PEG + PW)

### 3/ Description des feedstocks :

Le mélange maître de la poudre atomisée non préfrittée (1) est mousseux, et impossible à injecter.

Le mélange maître de la poudre atomisée préfrittées à 600°C (2) est moins mousseux mais ne s'injecte pas bien : les éprouvettes ne sont remplies qu'à moitié.

Le mélange maître de la poudre atomisée préfrittée à 900°C (3) est non mousseux, facile à extruder et à injecter. Les pièces sont frittées entre 96 et 99,5% sans fissuration.

Le mélange maître de la poudre atomisée et préfrittée à 1100°C (4) est non mousseux, abrasif pour les machines, et s'injecte bien. Cependant, les pièces frittées sont très poreuses : 77% de la densité théorique.

### 4/ Déliantage des pièces injectées :

Les feedstocks (2) (3) et (4) sont alors injectés de sorte à réaliser les pièces dans une presse Batenfeld selon les conditions suivantes :
- température de trémie : 150°C,
- température de buse : 170°C,
- pression : 140 bars.

Le déliantage des pièces injectées est réalisé thermiquement sous air, par thermo-oxydation à 12°C/heure jusqu'à 300°C avec un palier de 3 heures à cette température, puis à 12°C/heure jusqu'à 400°C, avec un palier de 3 heures à cette température.

### 5/ Observation des pièces déliantées :

Les pièces déliantées, qui n'ont pas de tenue mécanique, sont très faciles à réduire en poudre et ont été observées au microscope électronique à balayage (MEB).

Un morceau du feedstock (1), n'ayant pas subi de préfrittage et impossible à injecter, a été délianté avec le même cycle, pour observation de la poudre.

Les poudres déliantées issues des feedstocks (1) et (2) (non recuit et recuit à 600°C, respectivement) sont constitués d'agglomérats sous forme de pelotes (Figure 1). Ceci montre que les agglomérats sphériques se sont désolidarisés pendant le mélange et que la poudre nanométrique a repris sa forme naturelle.

Les poudres déliantées issues des feedstocks (3) et (4) (recuites à 900°C et 1100°C, respectivement) sont toujours agglomérées sous forme sphérique (Figure 2). Ces poudres s'écoulent en moins de 30 secondes.

### 6/ Frittage des pièces déliantées :

Les pièces vertes injectées issues des feedstocks (2), (3) et (4) ont été ensuite frittées à une température de 1300°C pendant 5 heures.

Il en résulte une densité de 99.1% pour la demi-pièce (2) issue de poudre préfrittée à 600°C, une densité de 98,7% pour la pièce entière et sans fissure (3) et 77% pour la pièce poreuse issue de la poudre (4).

Ces expériences révèlent que la zircone colorée n'est injectable qu'à condition de soumettre la poudre à un préfrittage (ou recuit) après atomisation-séchage. La qualité de la pièce finale dépend en outre de la température du préfrittage.

### 7/ Détermination de la température optimale du préfrittage :

Expérimentalement, il ressort par comparaison des feedstocks (2), (3) et (4) que la température optimale de préfrittage est supérieure à 600 °C dans le cas de la poudre de zircone yttriée à 3% (TZ3YS-E, Tosoh Corporation), colorée à l'aide de 3% massique d'oxyde de fer.

De fait, la température de préfrittage peut être déterminée au préalable par une mesure de dilatométrie sur une pastille de céramique colorée réalisée par pressage.

En théorie, la courbe de dilatation thermique en fonction de la température passe par un maximum juste avant le frittage qui permet au matériau de réduire son volume (dans le cas d'un frittage densifiant). Le retrait du matériau est de l'ordre de 10 à 30 % selon la pression exercée lors du pressage et la sorte de céramique colorée utilisée.

La figure 3 illustre une courbe de dilatation thermique en fonction de la température pour la zircone colorée en marron avec de l'oxyde de fer pressée à 50% de la densité théorique. La température où la dilatation atteinte est maximale est de 800 °C, la température de frittage est de 1150 °C (température où la vitesse de frittage est maximale) et la fin du frittage est à 1350 °C.

La température de préfrittage est donc la température T1 correspondant à la dilatation thermique maximale, juste avant le frittage. Ici, elle est égale à 800 °C.

Le bornage inférieur de cette température T1 est de 0.8xT1, préférentiellement 0.9xT1, soit 640 °C, voire 720 °C.

Le bornage supérieur de cette température est la température T2 correspondant à 2% de retrait dû au frittage, préférentiellement 1% de retrait dû au frittage, soit 1030°C, voire 1000°C.

Ainsi pour la zircone yttriée marron, la température de préfrittage peut être comprise entre 640°C et 1030°C, préférentiellement entre 720 °C et 1000 °C. En effet, l'expérience à 1100°C révèle une croissance des grains et une porosité peu satisfaisante.

## Revendications

1. Procédé de fabrication d'un mélange-maître pour moulage de pièces colorées comprenant les étapes suivantes :
- préparation d'un mélange comprenant une poudre céramique, et un colorant ;
- soumission du mélange à une étape d'atomisation-séchage pour obtenir une poudre atomisée;
- soumission de ladite poudre atomisée à une étape de préfrittage à une température de préfrittage comprise entre 0,8T1 et T2 avec :
• T1, la température en °C à laquelle la poudre atteint une dilatation thermique maximale, juste avant le frittage ;
• T2, la température en °C à laquelle la poudre atteint 2% de retrait dû au frittage ;
- mélange de la poudre préfrittée à un liant organique, avantageusement polymérique, pour obtenir le mélange-maître.

2. Procédé de fabrication d'un mélange-maître selon la revendication 1, ***caractérisé* en ce que** la poudre céramique est de la zircone, avantageusement dopée, par exemple à l'yttrium.

3. Procédé de fabrication d'un mélange-maître selon la revendication 2, ***caractérisé* en ce que** l'étape de préfrittage se déroule à une température comprise entre 700 et 1200°C.

4. Procédé de fabrication d'un mélange-maître selon l'une des revendications 1 à 3, ***caractérisé* en ce que** le colorant est un pigment coloré, avantageusement un oxyde métallique, par exemple de l'oxyde de fer, ou un précurseur métallique.

5. Procédé de fabrication d'un mélange-maître selon l'une des revendications 1 à 4, ***caractérisé* en ce que** le colorant représente de 0,1 à 15% en poids de la poudre inorganique.

6. Procédé de fabrication d'un mélange-maître selon l'une des revendications 1 à 5, ***caractérisé* en ce que** l'étape de préfrittage se déroule pendant une durée comprise entre 1 et 10 heures, préférentiellement entre 2 et 6 heures.

7. Procédé de fabrication d'un mélange-maître selon l'une des revendications 1 à 6, ***caractérisé* en ce que** le liant organique, avantageusement polymérique comprend un polymère de tenue présentant de bonnes propriétés de ductilité, un lubrifiant, un plastifiant et éventuellement un surfactant.

8. Procédé de fabrication d'un mélange-maître selon l'une des revendications 1 à 7, ***caractérisé* en ce que** la poudre préfrittée représente de 40 à 75% en volume du mélange-maître, préférentiellement entre 50 et 65%.

9. Procédé de fabrication d'une pièce moulée colorée comprenant les étapes suivantes :
- préparation d'un mélange-maître selon le procédé objet de l'une des revendications 1 à 8 ;
- injection du mélange-maître dans un moule pour former la pièce ;
- déliantage de la pièce ;
- frittage de la pièce.

10. Procédé de fabrication de pièces selon la revendication 9, ***caractérisé* en ce que** le frittage est réalisé à une température comprise entre 1250 °C et 1400 °C.

## Patentansprüche

1. Verfahren zur Herstellung eines Masterbatches für das Formen von farbigen Teilen, umfassend die folgenden Schritte:
- Herstellen eines Gemisches aus einem keramischen Pulver und einem Farbstoff;
- Sprühtrocknen der Mischung, um ein zerstäubtes Pulver zu erhalten;
- Durchführung eines Vorsinterschritts des zerstäubten Pulvers bei einer Vorsintertemperatur zwischen 0,8T1 und T2 worin:
▪ T1, die Temperatur in °C ist, bei der das Pulver unmittelbar vor der Sinterung eine maximale Wärmedehnung erreicht;
▪ T2, die Temperatur in °C ist, bei der das Pulver unmittelbar vor der Sinterung eine 2 %-ige Schrumpfung erreicht;
- Mischen des vorgesinterten Pulvers mit einem organischen Bindemittel, vorteilhafterweise Polymer, um den Masterbatch zu erhalten.

2. Verfahren zur Herstellung eines Masterbatches gemäß Anspruch 1, ***dadurch gekennzeichnet, dass*** es sich bei dem Keramikpulver um Zirkon handelt, das möglichst zum Beispiel mit Yttrium dotiert ist.

3. Verfahren zur Herstellung eines Masterbatches gemäß Anspruch 2, ***dadurch gekennzeichnet, dass*** der Vorsinterschritt bei einer Temperatur zwischen 700 und 1.200°C abläuft.

4. Verfahren zur Herstellung eines Masterbatches gemäß einem der Ansprüche 1 bis 3, ***dadurch gekennzeichnet, dass*** der Farbstoff ein Farbpigment möglichst ein Metalloxid, zum Beispiel Eisenoxid oder ein metallischer Vorläufer, ist.

5. Verfahren zur Herstellung eines Masterbatches gemäß einem der Ansprüche 1 bis 4, ***dadurch gekennzeichnet, dass*** der Farbstoff 0,1 bis 15 Gewichts- % des anorganischen Pulvers bildet.

6. Verfahren zur Herstellung eines Masterbatches gemäß einem der Ansprüche 1 bis 5, ***dadurch gekennzeichnet, dass*** der Vorsinterschritt während einer Zeitspanne zwischen 1 und 10 Stunden, vorzugsweise zwischen 2 und 6 Stunden, abläuft.

7. Verfahren zur Herstellung eines Masterbatches gemäß einem der Ansprüche 1 bis 6, ***dadurch gekennzeichnet, dass*** das organische, möglichst polymere Bindemittel ein Führungspolymer, das gute Duktilitätseigenschaften aufweist, ein Schmiermittel, einen Weichmacher und eventuell ein Tensid enthält.

8. Verfahren zur Herstellung eines Masterbatches gemäß einem der Ansprüche 1 bis 7, ***dadurch gekennzeichnet, dass*** das vorgesinterte Pulver 40 bis 75 % des Volumen des Masterbatches, vorzugsweise zwischen 50 und 65 %, darstellt.

9. Verfahren zur Herstellung eines farbigen Formteils, das die folgenden Schritte umfasst:
- Vorbereitung eines Masterbatches nach dem Verfahren, das Gegenstand eines der Ansprüche 1 bis 8, ist;
- Einspritzen des Masterbatches in eine Form um das Teil zu formen;
- Entbinden des Teils;
- Sinterung des Teils.

10. Verfahren zur Herstellung von Teilen gemäß Anspruch 9, **dadurch gekennzeichnet, dass** die Sinterung bei einer Temperatur zwischen 1.250°C und 1.400°C abläuft.

## Claims

1. A method of manufacturing a master batch for the molding of colored parts, comprising the steps of:
- preparing a mixture comprising a ceramic powder and a dye;
- submitting the mixture to a spray-drying step to obtain an atomized powder;
- submitting said atomized powder to a presintering step at a presintering temperature comprise between 0,8T1 and T2, with :
▪ T1 being the temperature in °C corresponding to the maximum thermal expansion of the powder, just before the sintering,
▪ T2 being the temperature in °C corresponding to a 2% shrinkage of the powder due to the sintering,
- mixing the presintered powder with an organic binder, advantageously polymeric, to obtain the master batch.

2. The method of manufacturing a master batch of claim 1, **characterized in that** the ceramic powder is zirconia, advantageously doped, for example, with yttrium.

3. The method of manufacturing a master batch of claim 2, **characterized in that** the presintering step occurs at a temperature in the range between 700°C and 1,200°C.

4. The method of manufacturing a master batch of any of claims 1 to 3, **characterized in that** the dye is a colored pigment, advantageously a metal oxide, for example, iron oxide, or a metal precursor.

5. The method of manufacturing a master batch of any of claims 1 to 4, **characterized in that** the dye amounts to from 0.1 to 15% by mass of the inorganic powder.

6. The method of manufacturing a master batch of any of claims 1 to 5, **characterized in that** the presintering step occurs for a duration in the range between 1 and 10 hours, preferably between 2 and 6 hours.

7. The method of manufacturing a master batch of any of claims 1 to 6, **characterized in that** the organic binder, advantageously polymeric, comprises a stable polymer having a good ductility, a lubricant, a plasticizer, and possibly a surfactant.

8. The method of manufacturing a master batch of any of claims 1 to 7, **characterized in that** the presintered powder amounts to from 40 to 75% by volume of the master batch, preferably between 50 and 65%.

9. A method of manufacturing a colored molded part comprising the steps of:
- preparing a master batch according to the method of any of claims 1 to 8;
- injecting the master batch into a mold to form the part;
- debinding the part;
- sintering the part.

10. The method of manufacturing parts of claim 9, **characterized in that** the sintering is performed at a temperature ranging between 1,250°C and 1,400°C.
